# EUROPEAN PATENT APPLICATION

(11) **EP 4 280 406 A1**
(43) Date of publication of application: **22.11.2023**
(21) Application number: 22173823.0
(22) Date of filing: 17.05.2022
(51) Int. Cl.: H02J 1/08, H02J 3/38, H02J 5/00, B63J 3/00

(54) **POWER DISTRIBUTION ASSEMBLY**

(71) Applicant: ABB SCHWEIZ AG, 5400 Baden (CH)
(72) Inventor: Haxhiu, Arber, 00980 Helsinki (FI); Lipponen, Harri, 00980 Helsinki (FI); Lehti, Matti, 00980 Helsinki (FI)
(74) Representative: Kolster Oy Ab

(57) **Abstract**

A power distribution assembly comprising an AC bus bar system (2); a supply connection system (4) comprising a direct current supply busbar (45); a first load connection system (6) comprising a direct current load busbar (65); a first supply system (8) electrically connected to the AC bus bar system (2) through the supply connection system (4), wherein the first supply system (8) is a direct current system; a first load (11), which is an alternating current load connected to the AC bus bar system (2) through the first load connection system (6); and a second load (12), which is electrically connected to the AC bus bar system (2). The power distribution assembly comprises a DC connection system (20) electrically connecting the supply busbar (45) to the load busbar (65), the DC connection system comprising a connection converter (22) which is a DC to DC converter.

## Description

### FIELD OF THE INVENTION

The invention relates to a power distribution assembly.

### BACKGROUND OF THE INVENTION

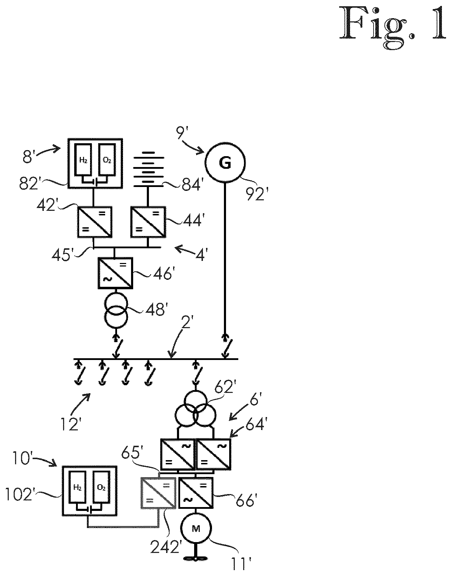

Figure 1 shows a connection diagram of a known power distribution assembly comprising an AC bus bar system 2', a supply connection system 4', a first load connection system 6', a first supply system 8', a second supply system 9', a third supply system 10', a first load 11', and a second load 12'.

The supply connection system 4' comprises a supply busbar 45', a supply converter 46' and a supply transformer 48'. The supply busbar 45' is a direct current busbar. The supply converter 46' and supply transformer 48' are connected in series between the supply busbar 45' and the AC bus bar system 2'.

The first load 11' is a medium voltage alternating current electric machine adapted to rotate a propeller of a ship. The first load 11' is electrically connected to the AC bus bar system 2' through the first load connection system 6'.

The first load connection system 6' comprises a load busbar 65', a load transformer 62', a first load converter 64', and a second load converter 66'. The load busbar 65' is a direct current busbar. The load transformer 62' is electrically connected between the AC bus bar system 2' and the first load converter 64'. The first load converter 64' is electrically connected between the load transformer 62' and the load busbar 65', and the second load converter 66' is electrically connected between the load busbar 65' and the first load 11'.

The first supply system 8' is electrically connected to the AC bus bar system 2' through the supply connection system 4'. The first supply system 8' is a direct current system.

The first supply system 8' comprises a fuel cell 82' and a battery 84'. The fuel cell 82' is electrically connected to the supply busbar 45' through a fuel cell converter 42', and the battery 84' is electrically connected to the supply busbar 45' through a battery converter 44'. Both the fuel cell converter 42' and the battery converter 44' are DC to DC converters.

The second supply system 9' is electrically directly connected to the AC bus bar system 2'. The second supply system 9' is an alternating current system comprising an alternating current generator 92'.

The third supply system 10' comprises a second fuel cell 102' which is electrically connected to the load busbar 65' through a second fuel cell converter 242'. The second fuel cell converter 242' is a DC to DC converter.

One of the disadvantages associated with the above known power distribution assembly is that it is not cost efficient to supply the first load 11' with the first supply system 8' due to a plurality of conversion stages between them.

Further, if the first load converter is a non-controlled diode rectifier adapted to supply power exclusively towards the load busbar, an efficiency of the fuel cells is poor when the ship is in a harbour in which case a total load of the power distribution assembly practically consists of the second load which cannot be supplied by the second fuel cell 102'. Therefore, only the fuel cell 82' is capable of supplying power to the second load 12' which lowers an efficiency of the fuel cells since an efficiency of a fuel cell decreases as a load thereof increases.

### BRIEF DESCRIPTION OF THE INVENTION

An object of the present invention is to provide a power distribution assembly so as to alleviate the above disadvantages. The objects of the invention are achieved by a power distribution assembly which is characterized by what is stated in the independent claim. The preferred embodiments of the invention are disclosed in the dependent claims.

The invention is based on the idea of providing the power distribution assembly with a DC connection system electrically connecting the supply busbar to the load busbar, the DC connection system comprising a connection converter which is a DC to DC converter.

An advantage of the power distribution assembly of the invention is that the DC connection system enables the first supply system to supply power cost efficiently to the first load.

### BRIEF DESCRIPTION OF THE DRAWINGS

In the following the invention will be described in greater detail by means of preferred embodiments with reference to the attached drawings, in which
Figure 1 shows a connection diagram of a known power distribution assembly; and
Figure 2 shows a connection diagram of a power distribution assembly according to an embodiment of the invention.

### DETAILED DESCRIPTION OF THE INVENTION

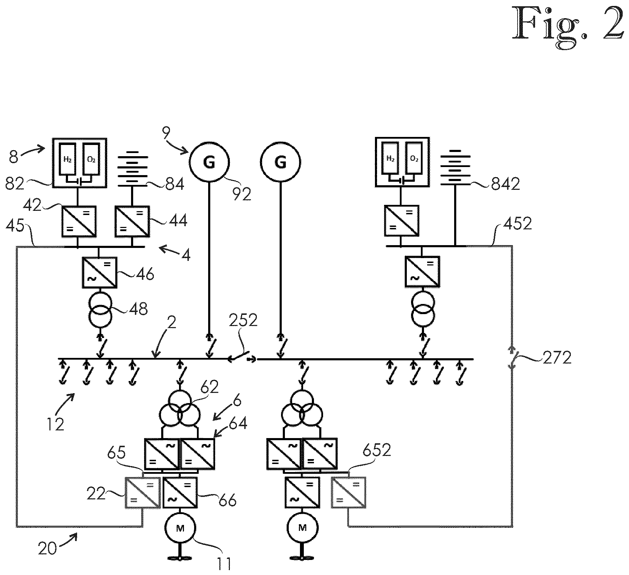

Figure 2 shows a connection diagram of a power distribution assembly comprising an AC bus bar system 2, a supply connection system 4, a first load connection system 6, a first supply system 8, a second supply system 9, a first load 11, a second load 12, and a DC connection system 20.

The supply connection system 4 comprises a supply busbar 45, a supply converter 46 and a supply transformer 48. The supply busbar 45 is a direct current busbar. The supply converter 46 and supply transformer 48 are connected in series between the supply busbar 45 and the AC bus bar system 2. The nominal voltage of the AC bus bar system 2 is higher than the nominal voltage of the supply busbar 45. In an alternative embodiment, the supply transformer is omitted, and the supply converter is adapted to alter voltage level between the supply busbar and the AC bus bar system.

The nominal power of the supply converter is selected based on types of the first and second load, for example. In an embodiment, the nominal power of the supply converter is less than the nominal power of the first supply system, wherein full power of the first supply system is adapted to be utilized only in situations where both the first and second loads are sufficiently high.

The first load connection system 6 comprises a load busbar 65, a load transformer 62, a first load converter 64, and a second load converter 66. The load busbar 65 is a direct current busbar. The load transformer 62 is electrically connected between the AC bus bar system 2 and the first load converter 64. The first load converter 64 is electrically connected between the load transformer 62 and the load busbar 65, and the second load converter 66 is electrically connected between the load busbar 65 and the first load 11. In an alternative embodiment, the load transformer is omitted, and the first load converter is adapted to alter voltage level between the AC bus bar system and the load busbar.

The first supply system 8 is electrically connected to the AC bus bar system 2 through the supply connection system 4. The first supply system 8 is a direct current system.

The first supply system 8 comprises a fuel cell 82 electrically connected to the supply busbar 45 through a fuel cell converter 42, and a battery 84 electrically connected to the supply busbar 45 through a battery converter 44. Both the fuel cell converter 42 and the battery converter 44 are DC to DC converters.

In an alternative embodiment, the first supply system comprises other type of power supply than a fuel cell, for example a solar power station. Further, in alternative embodiments the first supply system is directly connected to the supply busbar without any converters.

In an embodiment, the first supply system comprises a battery directly connected to the supply busbar, and the DC connection system comprises a disconnecting switch electrically between the supply busbar and the load busbar. This alternative is shown in Figure 2 in a form of a second battery 842, a second supply busbar 452, and a disconnecting switch 272 electrically between the second supply busbar 452 and a second load busbar 652. Except for the omission of the battery converter, and addition of the disconnecting switch, hardware of the right half of the connection diagram of Figure 2 is identical with the hardware of the left half of the connection diagram. As shown in Figure 2, the left and right halves of the connection diagram are connected via a disconnecting switch 252 electrically connected between left and right portions of the AC bus bar system 2.

The second supply system 9 is electrically directly connected to the AC bus bar system 2. The second supply system 9 is an alternating current system comprising an alternating current generator 92. In an embodiment, the second supply system comprises at least one alternating current generator whose nominal power is greater than or equal to 50% of the nominal power of the first load, and greater than or equal to 50% of the nominal power of the second load. In another embodiment, the second supply system comprises an alternating current electrical network. In yet another embodiment, the power distribution assembly does not comprise any second supply system.

The first load 11 is adapted to both draw power from the load busbar 65 and supply power to the load busbar 65. The first load 11 comprises a medium voltage alternating current electric machine load electrically connected to the AC bus bar system 2 through the first load connection system 6. The medium voltage alternating current electric machine of the first load 11 is adapted to rotate a propeller of a ship. The nominal voltage of the first load 11 is higher than the nominal voltage of the supply busbar 45.

In an alternative embodiment, the first load is not adapted to supply power to the load busbar. Further, type of the first load is not limited to a propulsion load but in alternative embodiments the first load is another type of alternating current load.

The second load 12 is electrically connected to the AC bus bar system 2. The second load 12 comprises hotel load. Herein, the hotel load is a different electrical load of a ship than load relating to rotating a propeller of the ship.

In an embodiment, the nominal power of the first load is less than or equal to 150% of the second load, and the nominal power of the second load is less than or equal to 150% of the first load. In another embodiment, the nominal power of the first load is greater than or equal to 40% of the nominal power of the first supply system, and the nominal power of the second load is greater than or equal to 40% of the nominal power of the first supply system.

The DC connection system 20 electrically connects the supply busbar 45 to the load busbar 65. The DC connection system 20 comprises a connection converter 22 which is a DC to DC converter. The nominal voltage of the load busbar 65 is higher than the nominal voltage of the supply busbar 45.

The first load converter 64 is a non-controlled diode rectifier adapted to supply power exclusively towards the load busbar, and the second load converter 66 is a bidirectional converter. Therefore, the first load converter 64 is not capable of feeding regenerative braking power from the first load 11 to the AC bus bar system 2. Instead, the power distribution assembly is adapted to feed regenerative braking power from the first load 11 to the supply busbar 45 through the DC connection system 20, wherein the connection converter 22 is a bidirectional converter. In an alternative embodiment, both the first load converter and the second load converter are bidirectional converters.

The nominal power of the connection converter 22 is greater than or equal to the nominal power of the first load 11. This enables supplying the first load 11 entirely through the DC connection system 20, and feeding full regenerative braking power from the first load 11 to the supply busbar 45. In an alternative embodiment, the nominal power of the connection converter is greater than or equal to 75% of the nominal power of the first load.

In an embodiment, the nominal power of the first supply system is 13MW, the nominal voltage of the supply busbar is 1.5kV, the nominal voltage of the AC bus bar system is 7kV, the nominal power of the second supply system is 13MW, the nominal power of the first load is 14MW, the nominal voltage of the first load 11 is 3kV, and the nominal power of the second load is 12MW. In an alternative embodiment, the nominal power of the first supply system is greater than or equal to 1MW, the nominal voltage of the supply busbar is in a range of 650 V to 2 kV, the nominal power of the first load is greater than or equal to 1MW, the nominal power of the second load is greater than or equal to 1MW, and nominal voltages of the AC bus bar system and first load are in the range of 2.4 kV to 69 kV.

It will be obvious to a person skilled in the art that the inventive concept can be implemented in various ways. The invention and its embodiments are not limited to the examples described above but may vary within the scope of the claims.

## Claims

1. A power distribution assembly comprising:
an AC bus bar system (2);
a supply connection system (4) comprising a supply busbar (45) which is a direct current busbar;
a first load connection system (6) comprising a load busbar (65) which is a direct current busbar;
a first supply system (8) electrically connected to the AC bus bar system (2) through the supply connection system (4), wherein the first supply system (8) is a direct current system;
a first load (11), which is an alternating current load electrically connected to the AC bus bar system (2) through the first load connection system (6), wherein the nominal voltage of the first load (11) is higher than the nominal voltage of the supply busbar (45);
a second load (12), which is electrically connected to the AC bus bar system (2),
**characterized in that** the power distribution assembly comprises:
a DC connection system (20) electrically connecting the supply busbar (45) to the load busbar (65), the DC connection system comprising a connection converter (22) which is a DC to DC converter.

2. The power distribution assembly according to claim 1, wherein the first supply system (8) comprises at least one fuel cell (82).

3. The power distribution assembly according to claim 1 or 2, wherein the nominal power of the first load (11) is greater than or equal to 40% of the nominal power of the first supply system (8), and the nominal power of the second load (12) is greater than or equal to 40% of the nominal power of the first supply system (8).

4. The power distribution assembly according to any one of claims 1 to 3, wherein the supply connection system (4) comprises a supply converter (46) electrically connected between the supply busbar (45) and the AC bus bar system (2).

5. The power distribution assembly according to any one of claims 1 to 4, wherein the power distribution assembly comprises a second supply system (9) electrically connected to the AC bus bar system (2), wherein the second supply system (9) comprises at least one alternating current generator (92).

6. The power distribution assembly according to claim 5, wherein the nominal power of the at least one alternating current generator (92) is greater than or equal to 50% of the nominal power of the first load (11), and greater than or equal to 50% of the nominal power of the second load (12).

7. The power distribution assembly according to any one of claims 1 to 6, wherein the nominal power of the first load (11) is less than or equal to 150% of the second load (12), and the nominal power of the second load (12) is less than or equal to 150% of the first load (11).

8. The power distribution assembly according to any one of claims 1 to 7, wherein the first load connection system (6) comprises a first load converter (64), and a second load converter (66), wherein the first load converter (64) is electrically connected between the AC bus bar system (2) and the load busbar (65), and the second load converter (66) is electrically connected between the load busbar (65) and the first load (11).

9. The power distribution assembly according to claim 8, wherein the first load converter (64) is adapted to supply power exclusively towards the load busbar (65), and the second load converter (66) is a bidirectional converter.

10. The power distribution assembly according to any one of claims 1 to 9, wherein the nominal power of the connection converter (22) is greater than or equal to 75% of the nominal power of the first load (11).

11. The power distribution assembly according to claim 10, wherein the connection converter (22) is a bidirectional converter.

12. The power distribution assembly according to any one of claims 1 to 11, wherein the first load (11) comprises a medium voltage alternating current electric machine adapted to rotate a propeller of a ship.

13. The power distribution assembly according to claim 12, wherein the second load (12) is a different electrical load of the ship than load relating to rotating the propeller of the ship.

14. The power distribution assembly according to any one of claims 1 to 13, wherein the nominal voltage of the supply busbar (45) is in a range of 650 V to 2 kV, and nominal voltages of the AC bus bar system (2) and first load (11) are in the range of 2.4 kV to 69 kV.
